# EUROPÄISCHE PATENTSCHRIFT

(11) **EP 1 972 297 B1**
(45) Veröffentlichungstag und Bekanntmachung des Hinweises auf die Patenterteilung: **21.10.2015**
(21) Anmeldenummer: 07104421.8
(22) Anmeldetag: 19.03.2007
(51) Int. Cl.: A61C 8/00

(54) **Kombination eines Abutments und einer zweiteilige Schraube**
Combination of an Abutment and a two-part screw.
Combinaison d'une butée dentaire et d'une vis en deux parties.

(43) Veröffentlichungstag der Anmeldung: 24.09.2008
(73) Patentinhaber: Straumann Holding AG, 4002 Basel (CH)
(72) Erfinder: Hug, Thomas Silvan, 8703 Erlenbach (CH); Egli, David, 4053 Basel (CH); Schuerch, Hans, 4425 Titterten (CH)
(74) Vertreter: Modiano, Micaela Nadia

(56) Entgegenhaltungen:
- EP-A- 0 419 431
- EP-A1- 0 473 262
- EP-A1- 0 707 835
- DE-C1- 4 405 797
- US-A- 5 040 983
- US-A1- 2002 106 610
- US-A1- 2003 124 488

## Beschreibung

Die vorliegende Erfindung betrifft eine Kombination eines Abutment und einer zweiteilige Schraube für ein Dentalimplantat mit einer vereinfachten und sichereren Befestigungsanordnung, die ein Abutment und ein Dentalimplantat miteinander formschlüssig verbindet.

### Stand der Technik

Dentalprothesen mit einem im Kiefer eingesetzten Dentalimplantat und einem darauf befestigten Abutment sind hinreichend als Zahnersatz bekannt. Ein Abutment, welches bevorzugt aus Keramik hergestellt ist, wobei auch Kunststoff- oder Polymerverbindungen möglich sind, ist dabei mittels einer Schraube kraft- und formschlüssig mit dem Dentalimplantat verbunden. Die Schraube ist bevorzugt aus Titan hergestellt, wobei jedoch auch Ausführungen aus Stahl möglich sind.

Das Einsetzen der dem Zahnprofil angepassten Prothese erfolgt im allgemeinen sobald das im Knochen des Patienten eingesetzte Implantat eingeheilt ist und wird vom behandelnden Arzt ausgeführt. Das Zahntechniklabor liefert dazu die erforderlichen Prothesenkomponenten, welche sich aus dem Abutment mit der darauf individuell angefertigten Zahnkrone oder Brücke und der (Befestigungs)-Schraube zusammensetzen. Zur Fixierung des Abutments am Dentalimplantat wird hierzu das Abutment auf das Implantat aufgesetzt, darauffolgend wird eine Schraube durch einen Hohlraum eingesetzt, der die Gesamtkonstruktion aus Abutment-Implantat durchsetzt, und dann in ein Gewinde des Dentalimplantats eingeschraubt. Auf diese Weise werden das Abutment und das Dentalimplantat formschlüssig miteinander verbunden. Die Schraube wird im allgemeinen mit einem Drehmoment von mehr als 30 Nm angezogen. Bedingt durch die geringen Platzverhältnisse im Mund und durch die Abmessungen der Zahnprothese müssen diese Schrauben relativ klein ausgebildet werden, damit sie in einer Zahnkrone Platz finden.

Das Einsetzen einer solchen Schraube erfordert demzufolge ein nicht unerhebliches Geschick vom Kieferorthopäden, was eine Behandlung erschwerend beeinflussen kann. So kann es passieren, dass die Schraube beim Einsetzen aus dem Einsetzwerkzeug rutscht und auf den Boden fällt, so dass entweder eine neue Schraube verwendet werden muss oder die Schraube zeitaufwendig sterilisiert werden muss, da die Schraube sterilen Bedingungen unterliegt. In einem schlimmeren Fall kann die Schraube bei Verlust auch vom Patienten während der Behandlung verschluckt werden. Darüber hinaus erfordert das Einsetzen einer einzelnen Schraube durch die relativ enge Öffnung der Prothese hohe Konzentration und Geschicklichkeit.

Aus der EP 1 269 932 A ist ein Dentalimplantat mit einer herkömmlichen Schraube bekannt, wobei ein Pfosten und ein damit verbundenes Zwischenstück, an einem Dentalimplantat mithilfe dieser Schraube drehfest befestigt sind, da diese Schraube jedoch einstückig ist, kann es zu den oben angeführten ungewünschten Effekten kommen.

Dokument EP 0 707 835A offenbart die Kombination eines Abutments und einer zweiteiligen Schraube mit einem Kopf, einer Schraubenstange und einem Schraubende, wobei der Kopf und das Schraubende derart bemessen sind, dass beide in dem Schraubendurchführungskanal des Abutments axial gesichert aufgenommen werden, wobei der Kopf und das koronale Ende der Schraubenstange mit einem Gewinde verbunden sind oder die Schraubenstange apikal durch ein Gewinde mit dem Schraubenende verbunden ist.

### Zusammenfassung der Erfindung

Der vorliegenden Erfindung liegt daher die Aufgabe zugrunde, eine zweiteilige Befestigungschraube für ein Dentalimplantat mit einer vereinfachten und sichereren Handhabung kostengünstig bereitzustellen, das die oben angeführten Probleme vermeidet.

Im Rahmen dieser Aufgabe besteht eine besondere Aufgabe der vorliegenden Erfindung darin, eine zweiteilige Befestigungschraube für ein Dentalimplantat zu realisieren, das eine Vor-Montage durch den Hersteller, den Zahntechniker und/oder den Arzt erlaubt. Desweiteren soll erfindungsgemäß auch die Vor-Molatierung problemlos lösbar sein, um Arbeiten am Abutment selbst zu ermöglichen oder einen Austausch im Falle der Beschädigung der Schraube zu gestatten.

Eine weitere Aufgabe der vorliegenden Erfindung besteht darin, dass der mit einer zweiteiligen Schraube versehende Zahnaufbau unkompliziert direkt in das Dentalimplantat einsetzbar ist.

Eine weitere Aufgabe der vorliegenden Erfindung besteht darin, ein Verlieren der Schraube bei der Montage nahezu auszuschließen.

Die oben angeführten Aufgaben und weitere der nachfolgenden Beschreibung zu entnehmenden Aufgaben werden durch eine Kombination eines Abutments und einer zweiteilige Schraube gemäß Anspruch 1 oder Anspruch 3 erfüllt. Weitere vorteilhafte Ausführungsformen der vorliegenden Erfindung sind Gegenstand der Unteransprüche.

Nach einer gegenwärtig bevorzugten Ausführung der vorliegenden Erfindung besteht die zweiteilige Schraube aus einer Mutter und einer Schraubenstange. Folglich kann das Abutment bereits vormontiert vom Dental labor geliefert werden, d. h. die Schraubenstange kann bereits an einem Ende mit der in dem Schraubendurchführungskanal befindlichen Mutter verschraubt werden. Die Schraube kann in einem derart vormontierten Zustand nicht verloren gehen, da einerseits der Gewindedurchmesser der Schraubenstange auf der apikalen Seite größer dimensioniert ist als der Schraubendurchführungskanal des Abutments und andererseits der im montierten Zustand koronal gelegene Kopf der Mutter von einer Abutment-Innenkante aufgehalten wird, die in Bezug auf den Kopf der Mutter einen kleineren Durchmesser aufweist. Die Mutter ist mit dem koronalen Gewinde der Schraubenstange verschraubt. Zur Verbindung des Abutments mit dem Dentalimplantat muss daher nur der aus dem Abutment herausragende Teil der Schraubenstange in das Dentalimplantatgewinde eingesetzt und aogeschraubt werden. Ein umständliches Einsetzen einer Mutter und/oder Schraube durch den Schraubendurchführungskanal entfällt daher vollständig. Darüber hinaus verhindert diese Vormontage einen Verlust der Schraube, die entweder herunterfallen könnte oder, wesentlich schwerwiegender, vom Patienten verschluckt werden könnte, was wiederum erheblich zur Sicherheit einer derartigen Behandlung beiträgt.

In einer anderen gegenwärtig bevorzugten Ausführungsform der Erfindung ist die Schraube mit einer verschraubten Schraubenbüchse ausgestattet.

Folglich kann das Abutment mit der durch den axialen Schraubendurchführungskanal des Abutments geführten Schraube ausgestattet werden und mit der Schraubenbüchse am Implantat verschraubt werden. Die Schraube greift dabei mit dem koronal angeordneten Schraubenkopf in das Innere des Abutments ein. Diese Anordnung erweitert das apikale Ende der Schraube im geschraubten Zustand. Diese Anordnung wird vormontiert vom Zahnlabor bereitgestellt, so dass beim Einsetzen nur die Schraubenbüchse mit ihrem apikal angeordneten Außengewinde in das Gewinde des Implantats eingeschraubt werden muss. Diese Anordnung ermöglicht auf der einen Seite einfaches Einsetzen der Dentalprothese und auf der anderen Seite ist ein Verlust der Schraube nahezu ausgeschlossen.

### Kurzbeschreibung der Figuren

Weitere Merkmale und Vorteile der vorliegenden Erfindung sowie die Wirkungsweise der exemplarischen Ausführungsformen der vorliegenden Erfindung werden unten mit Bezug auf die begleitenden Zeichnungen beschrieben.

Die begleitenden Zeichnungen veranschaulichen die vorliegende Erfindung und dienen zusammen mit der Beschreibung weiterhin dazu, die Grundsätze der Erfindung zu erklären und es einem Fachmann auf dem betreffenden Gebiet zu ermöglichen, die Erfindung herzustellen und zu verwenden. Dabei zeigen:
Fig. 1 einen Längsschnitt durch einen Zusammenbau eines Abutments mit einem Dentalimplantat mit einer zweiteiligen Schraube gemäß einer ersten Ausführungsform der Erfindung;
Fig. 2 eine Seitenansicht einer Schraubenstange der zweiteiligen Schraube für ein Dentalimplantat gemäß Fig. 1;
Fig. 3A eine Unteransicht einer Mutter für die zweiteilige Schraube für ein Dentalimplantat von der dem Dentalimplantat zugewandten Seite gemäß Fig. 1;
Fig. 3B eine Seitenansicht einer Mutter für die zweiteilige Schraube für ein Dentalimplantat gemäß Fig. 1;
Fig. 3C eine Aufsicht einer Mutter für die zweiteilige Schraube für ein Dentalimplantat von der dem Abutment zugewandten Seite gemäß Fig. 1;
Fig. 3D ein Längsschnitt einer Mutter für die zweiteilige Schraube für ein Dentalimplantat gemäß Fig. 1;
Fig. 4 einen Längsschnitt durch einen Zusammenbau eines Abutments mit einem Dentalimplantat mit einer zweiteiligen Schraube gemäß einer zweiten Ausführungsform der Erfindung;
Fig. 5A eine Aufsicht einer Schraubenbüchse der zweiteiligen Schraube der Fig. 4 in einer Ansicht von einer dem Dentalimplantat zugewandten Seite;
Fig. 5B eine Seitenansicht der Schraubenbüchse gemäß Fig. 4;
Fig. 5C eine Aufsicht der Schraubenbüchse gemäß Fig. 4 von einer der Schraubenstange zugewandten Seite;
Fig. 5D einen Längsschnitt durch die Schraubenbüchse für die zweiteilige Schraube gemäß Fig. 4;
Fig. 6A eine Seitenansicht der Schraubenstange gemäß Fig. 4;
Fig. 6B eine Aufsicht des Schraubenkopfs der zweiten Ausführungsform der Erfindung gemäß Fig. 4; und
Fig. 6C einen Längsschnitt durch die Schraube der zweiten Ausführungsform der Erfindung gemäß Fig. 4;

### Beschreibung der bevorzugten Ausführungsformen der Erfindung

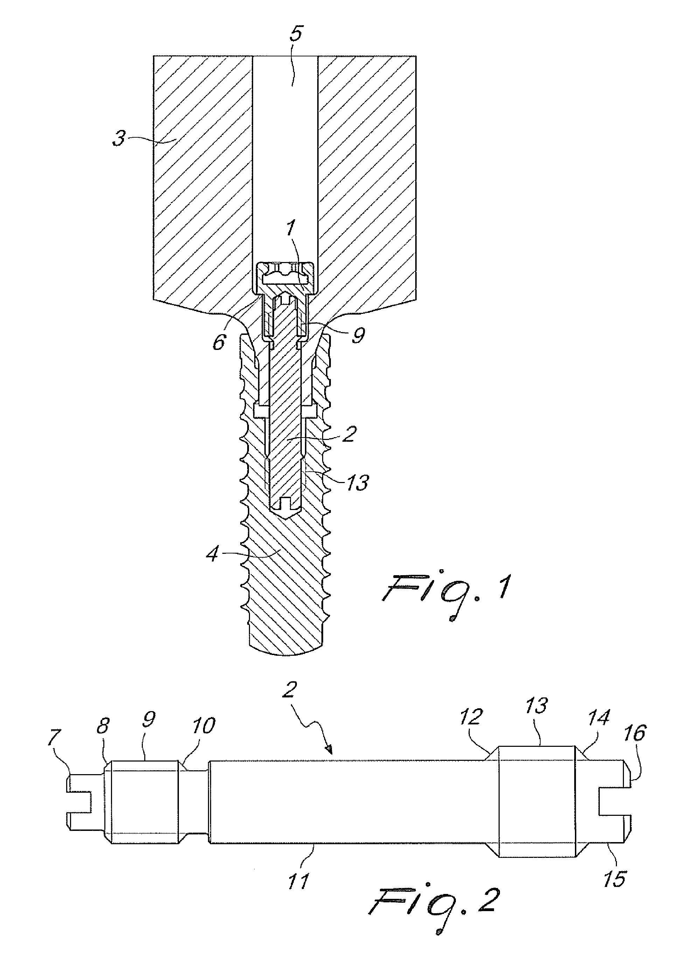

Anhand der nachfolgenden Figuren 1 bis 6D werden zwei gegenwärtig bevorzugte Ausführungsformen der vorliegenden Erfindung einer zweiteiligen Schraube für ein Dentalimplantat beschrieben, die mit einer Schraubenstange und einer Mutter, die mit einem Innengewinde zur schraubenden Verbindung mit einem Gewinde an der Schraubenstange ausgebildet ist, wobei die Schraubenstange mit einem weiteren Gewinde ausgestattet ist, bzw. die Schraubenbüchse ein Außengewinde aufweist, das ausgebildet ist, um die Schraube mit dem Dentalimplantat schraubend zu verbinden.

Durch die erfindungsgemäße Ausgestaltung kann die Schraubenstange bei gleichbleibendem Durchmesser der koronalen und/oder apikalen Enden der Schraube schmäler gewählt werden. Dies hat den Vorteil, dass am apikalen Ende des Abutments die Wandstärke größer gewählt werden kann. Dadurch wird dieses Ende stabiler gestaltet, was insbesondere bei dem Werkstoff Keramik von Vorteil ist.

Figur 1 zeigt ein Dentalimplantat 4 mit Abutment 3 im verschraubten Zustand, wobei dafür eine zweiteilige Schraube gemäß der ersten Ausführungsform der Erfindung eingesetzt wird. Insbesondere sind das Dentalimplantat 4 und das Abutment 3 mit einer zweiteiligen Schraube, die aus der Mutter 1 und der Schraubenstange 2 besteht, miteinander verbunden. Die Mutter 1 wird hierzu durch einen Schraubendurchführungskanal oder Schraubendurchführungskamin 5, der zentrisch im Abutment 3 angeordnet ist, auf ein erstes Gewinde 9 an der Schraubenstange 2, siehe Figur 2, aufgeschraubt und angezogen, wobei die Mutter 1 im voll angezogenen Zustand mit einer apikal gelegenen Kante 6 an einem stufenförmigen Ansatz des Schraubcndurchführungskanals 5 des Abutments 3 anliegt. Das erste Gewinde 9 ist dabei im montierten Zustand an einem koronalen Ende der Schraube angeordnet. Dabei hat sich ein Anziehen der Schraube mit einem Drehmoment von mehr als 30 Nm als besonders vorteilhaft bewiesen.

Figur 2 zeigt, dass an der Schraubenstange 2 an der an der Mutter 1 zugewandten Seite ein erster symmetrischer U-förmiger Zapfen 7 ausgebildet ist, an dessen Unterkante sich eine erste Abfasung 8 anschließt, die am Ende der Schraubenstange 2 in das koronal angeordnete erste Gewinde 9 übergeht. Die erste Abfasung 8 ermöglicht dabei ein einfaches Aufsetzen der Mutter 1 auf die Schraubenstange 2 und verhindert ein Verkanten derselben. Daran anschließend ist ein ringförmiger Hals 10 angeordnet, der in axialer Richtung in einen zylinderförmigen Schaft 11 übergeht. An dem dem ersten Gewinde 9 abwandten Ende des zylindrischen Schafts 11 befindet sich eine zweite Abfasung 12, die nahtlos an dem anderen Ende in einen Bereich eines zweiten apikal angeordneten Gewindes 13 übergeht, Die Gewinde 9 und 13 der Schraubenstange 2 sind hierbei als Außengewinde ausgebildet. Am Ende des zweiten Gewindes 13 ist eine dritte Abfasung 14 angeordnet, die in einen zweiten symmetrischen U-förmigen Zapfen 16 übergeht, dessen Schenkel 15 plan in axialer Richtung angeordnet sind und mit dem Außendurchmesser des ersten Gewindes 9 fluchten.

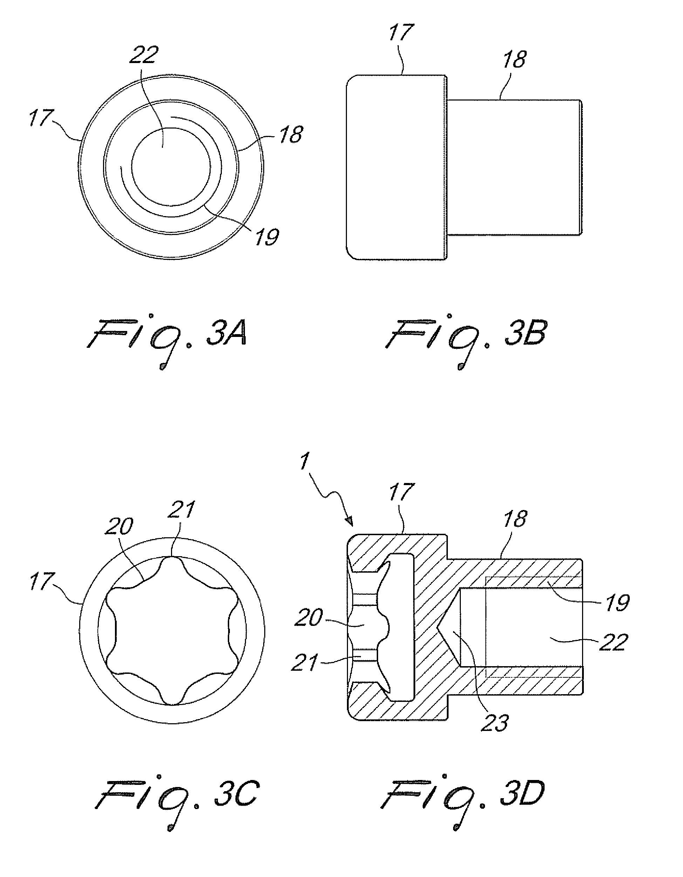

Die Figuren 3A-3D zeigen die Mutter 1 der zweiteiligen Schraube gemäß der ersten erfindungsgemäßen Ausführungsform in unterschiedlichen Ansichten. Die Mutter 1 besteht aus einem Kopf 17 und einem daran anschließenden Schaft 18. Der Kopf 17 ist bevorzugt als Linsenkopf ausgeführt und weist zur Aufnahme eines, hier nicht dargestellten, Einsetzwerkzeugs ein Innenprofil auf, das die Form eines abgerundeten, sternförmigen Innensechskant beinhaltet, siehe Figur 3C. Das Innenprofil besteht dabei auf dem gesamtem Umfang alternierend aus den Auswölbungen 20 und den dazwischenliegenden Flächen 21. Ähnliche Profile sind auch als sogenannte Torxschrauben bekannt. Im Schaft 18 ist ein symmetrisches Sackloch 22 angeordnet, das mit einem Innengewinde 19 (drittes Gewinde) versehen ist. Weiter weist das geschlossene Ende des Sacklochs 22 eine konusformige Senkung 23 auf. Im Montagezustand, d. h. wenn die in das Innere des Abutments 3 eingreifende Mutter 1 mit ihrem Innengewinde 19 (drittes Gewinde) durch den Schraubendurchführungskanal 5 auf das entsprechende erste koronal angeordnete Gewinde 9 der Schraubenstange 2 verschraubt ist, wirkt die Mutter 1 als Schraubenkopf für die Kombination aus Mutter 1 und Schraubenstange 2. Das zweite Gewinde 13 der Schraubenstange 2 ist an einem apikalen Ende der Schraube angeordnet, das in Bezug auf den Schraubendurchführungskanal 5 des Abutments 3 axial erweitert ist.

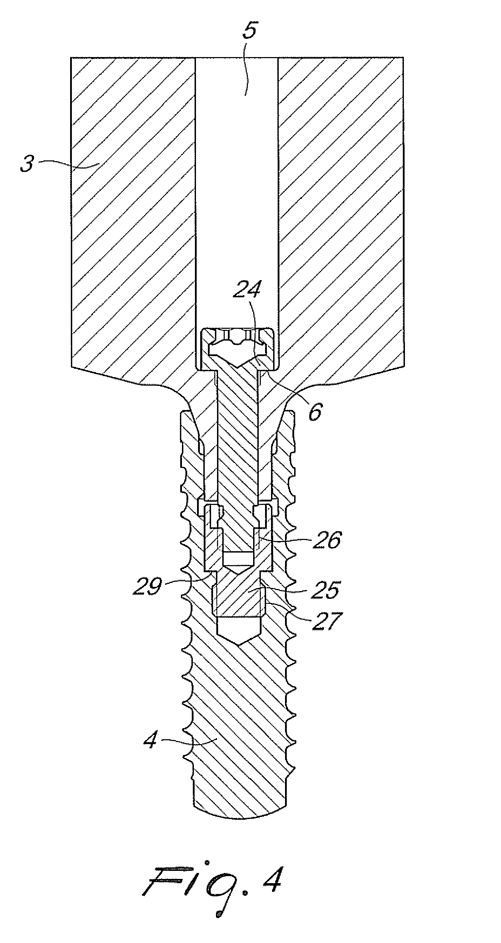

Figur 4 zeigt eine zweite Ausführungsform der erfindungsgemäßen zweiteiligen Schraube, wobei gleiche Elemente der Figur 1 mit gleichen Bezugszeichen benannt sind, und wobei das Dentalimplantat 4 und das Abutment 3 mit der zweiteiligen Schraube der zweiten Ausführungsform verbunden sind, die von einer Schraube 24 und einer Schraubenbüchse 25 gebildet wird.

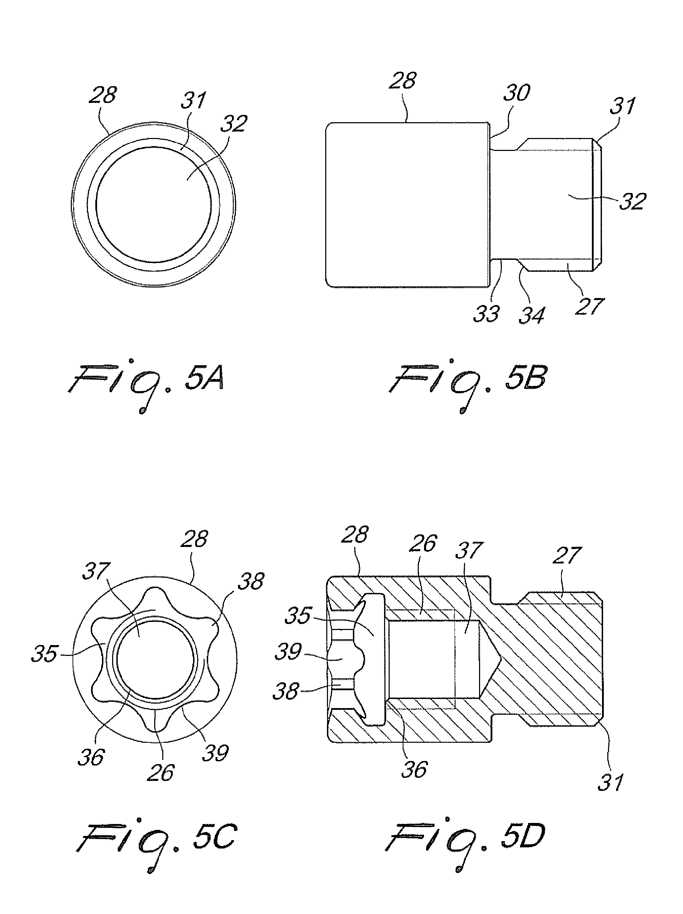

Figuren 5A-5C zeigen die Schraubenbüchse 25 der Schraube 24 der zweiten Ausführungsform in unterschiedlichen Ansichten, wobei die Schraubenbüchse 25 einen zylindrischen Kopf 28 aufweist, der an einem Ende über einen Absatz 30 an einen zylindrischen Teil 33 anschließt, wobei der Absatz 30 der Schraubenbüchse 25, in einer mit dem Abutment 3 verschraubten Position, formschlüssig an der Kante 29 des Dentalimplantats 4 anliegt, siehe Figur 4.

An den zylindrischen Teil 33 schließt sich eine zweite Fase 34 an, die in axialer Richtung an ein erstes apikales Gewinde 27 angrenzt. Das erste apikale Gewinde 27 ist dabei als Außengewinde am gesamten Umfang des zylindrischen Zapfen 32 ausgebildet und besitzt an der Kante eine erste Fase 31, die an das erste Gewinde 27 angrenzt. Der zylindrische Kopf 28 besitzt eine symmetrische zweite Bohrung 37, die bis in die zentrale Region des zylindrischen Teils 33 hineinragt, wobei der Bereich einer ersten Bohrung 35 einen größeren Durchmesser als die zweite Bohrung 37 aufweist und einen sternförmigen abgerundeten Innensechskant beinhaltet. Der Innensechskant besteht dabei aus einer Mehrzahl von Auswölbungen 39 und Flächen 38, die die abgerundeten Spitzen bilden. Am unteren Ende der Bohrung 35 befindet sich eine Abfasung 36, die an ein im wesentlichen die zweite Bohrung 37 in axialer Richtung umschließendes zweites koronales Gewinde 26 angrenzt, wobei das zweite koronale Gewinde 26 als Innengewinde ausgebildet ist. Obwohl in der Fig. 5D der Außendurchmesser des ersten apikalen Gewindes 27 kleiner als der Durchmesser des zylindrischen Kopfes 28 dargestellt ist, kann der Außendurchmesser des ersten apikalen Gewindes 27 gleich mit dem Durchmesser des zylindrischen Kopfes 28 sein, so dass das gesamte Teil aus einem zylindrischen Block gebildet werden kann.

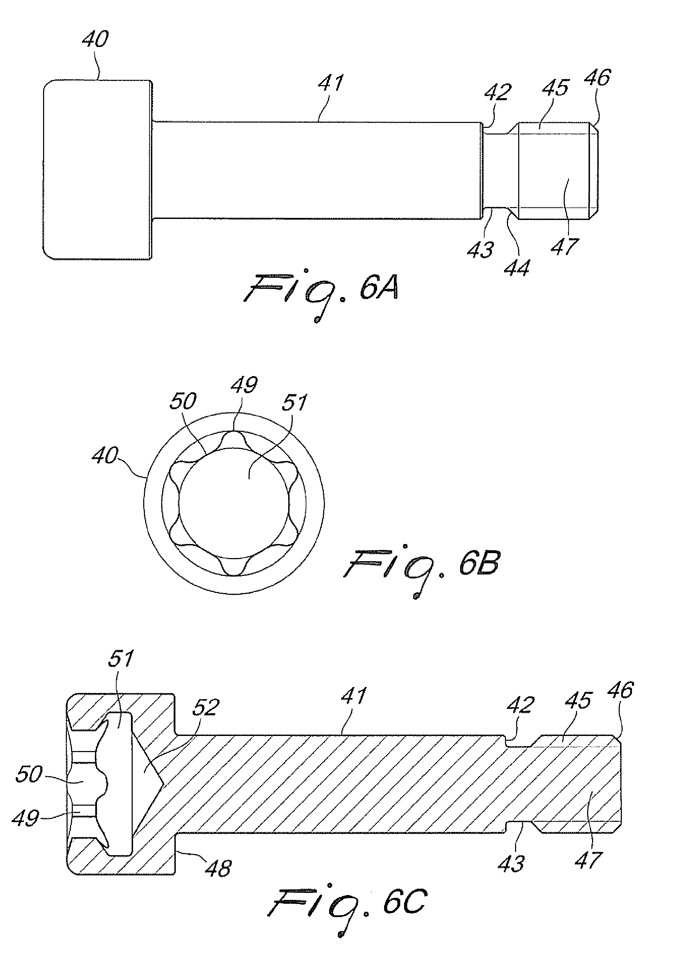

Die Figuren 6A-6C zeigen die Schraube 24 in unterschiedlichen Darstellungen. Die Schraube 24 besteht aus einem Kopf 40, der bevorzugt als Linsenkopf ausgebildet ist, einem daran angrenzenden Schaft 41, der sich axial bis zu einer ersten Fase 42 erstreckt. An die erste Fase 42 schließt sich ein Bund 43 an, der zwischen einem Zylinderteil 47 und dem Schaft 41 liegt und einen geringeren Durchmesser als Schaft 41 und Zylinderteil 47 aufweist. Der rundsymmetrische Zylinderteil 47 besitzt eine zweite Fase 44, die an den Bund 43 angrenzt und eine dritte Fase 46, die einerseits den Zylinderteil abschließt und andererseits an ein Außengewinde 45 (drittes Gewinde) angrenzt, das sich zwischen den beiden Fasen 44, 46 befindet und das als Außengewinde ausgebildet ist. Der Gewindegrund des Außengewindes 45 entspricht im wesentlichen dem Durchmesser des Bunds 43.

Der Kopf 40 der Schraube 24 besitzt einen, ähnlich der bereits in Figur 3C und 5C beschriebenen, sternförmigen, abgerundeten Innensechskant, der eine Mehrzahl von Flächen 49 und Auswölbungen 50 aufweist, die auf dem gesamten Umfang alternierend angeordnet sind. An der Bodenfläche des Hohlraums 51 befindet sich eine konische Senkung 52. In verschraubter Einbaulage liegt die Kante 48 des Kopfs 40 form- und kraftschlüssig an der Kante 6 des Schraubendurchführungskanals 5 des Abutments 3 an, siehe Figur 4.

Obwohl die Erfindung in Verbindung mit den gegenwärtig bevorzugten Ausführungsformen beschrieben wurde, wird es für den einschlägig versierten Fachmann ohne weiteres verständlich, dass Abänderungen der Erfindung möglich sind, ohne sich vom Schutzumfang dieser zu lösen, wie in den anliegenden Ansprüchen definiert. So können zum Beispiel in der zweiten Ausführungsform das zweite Gewinde 26 als Außengewinde ausgebildet werden und das dritte Gewinde 45 als Innengewinde.

Wenn in irgendeinem der Ansprüche erwähnte technische Merkmale mit einem Bezugszeichen versehen sind, wurden diese Bezugszeichen lediglich eingeschlossen, um die Verständlichkeit der Ansprüche zu erhöhen. Entsprechend haben diese Bezugszeichen keine einschränkende Auswirkung auf den Schutzumfang eines jeden Elements, das exemplarisch durch solche Bezugszeichen bezeichnet wird.

### Bezugszeichenliste:

- 1: Mutter
- 2: Schraubenstange
- 3: Abutment
- 4: Dentalimplantat
- 5: Schraubendurchführungskanal
- 6: Kante (am Abutment)
- 7: erster Zapfen
- 8: erste Abfasung
- 9: erstes Gewinde (Außengewinde der Schraubenstange)
- 10: Hals
- 11: zylindrischer Schaft
- 12: zweite Abfasung
- 13: zweites Gewinde (Außengewinde der Schraubenstange)
- 14: dritte Abfasung
- 15: Schenkel
- 16: zweiter Zapfen
- 17: Kopf (der Mutter)
- 18: Schaft
- 19: Innengewinde der Mutter (drittes Gewinde)
- 20: Auswölbung (der Mutter)
- 21: Fläche (der Mutter)
- 22: Sackloch
- 23: Senkung
- 24: Schraube
- 25: Schraubenbüchse
- 26: zweites Gewinde (Innengewinde der Schraubenbüchse)
- 27: erstes Gewinde (Außengewinde der Schraubenbüchse)
- 28: zylindrischer Kopf (der Schraubenbüchse)
- 29: Kante (Schraubenbüchse)
- 30: Absatz
- 31: erste Fase (Schraubenbüchse)
- 32: zylindrischer Zapfen
- 33: zylindrischer Teil
- 34: zweite Fase (Schraubenbüchse)
- 35: erste Bohrung
- 36: Abfasung
- 37: zweite Bohrung
- 38: Fläche (Schraubenbüchse)
- 39: Auswölbung (Schraubenbüchse)
- 40: Kopf (Schraube)
- 41: Schaft
- 42: erste Fase (Schraube)
- 43: Bund
- 44: zweite Fase (Schraube)
- 45: Außengewinde der Schraube (drittes Gewinde)
- 46: dritte Fase (Schraube)
- 47: Zylinderteil
- 48: Kante (der Schraube)
- 49: Fläche (der Schraube)
- 50: Auswölbung (der Schraube)
- 51: Hohlraum
- 52: Senkung (Schraube)

## Patentansprüche

1. Kombination eines Abutments (3) für ein Dentalimplantat (4), wobei das Abutment (3) einen Schraubendurchführungskanal (5) umfasst, und einer zweiteiligen Schraube für ein Dentalimplantat (4) mit einer Schraubenstange (2) und einer Mutter (1),wobei die Mutter (1) und der Schraubendurchführungskanal (5) derart bemessen sind, dass die Mutter (1) in dem Schraubendurchführungskanal (5) axial gesichert aufgenommen wird, und wobei die Mutter (1) mit einem Innengewinde (19) zur schraubenden Verbindung mit einem koronalen Gewinde (9) an der Schraubenstange (2) ausgebildet ist, wobei die Schraubenstange (2) mit einem apikalen Gewinde (13) ausgestattet ist, das ausgebildet ist, um die Schraube mit dem Dentalimplantat (4) schraubend zu verbinden, wobei das Ende der Schraube, an dem das apikale Gewinde (13) ausgebildet ist, einen Durchmesser aufweist, der in Bezug auf den Durchmesser eines apikalen Endes des Schraubendurchführungskanals (5) erweitert ist,
wobei die Mutter (1) im geschraubten Zustand als Schraubenkopf wirkt, der ausgebildet ist, um in einem voll angezogenen Zustand der Schraube mit einer apikal gelegenen Kante (6) an einem stufenförmigen Ansatz des Schraubendurchführungskanals (5) anzuliegen.

2. Kombination nach Anspruch 1, wobei die Mutter (1) einen Kopf (17) aufweist, der einen abgerundeten, sternförmigen Innensechskant hat.

3. Kombination eines Abutments (3) für ein Dentalimplantat (4), wobei das Abutment (3) einen Schraubendurchführungskanal (5) umfasst, und einer zweiteiligen Schraube für ein Dentalimplantat mit einer Schraube (24) und einer Schraubenbüchse (25), wobei die Schraube mit dem Abutment (3) vormontiert ist, wobei der Kopf (40) der Schraube (24) und der Schraubendurchführungskanal (5) derart bemessen sind, dass der Kopf (40) der Schraube (24) in dem Schraubendurchführungskanal (5) axial gesichert aufgenommen wird, und wobei die Schraube (24) apikal mit einem Gewinde (45) versehen ist, das sich im vormontierten Zustand aus dem apikalen Ende des Schraubendurchführungskanals (5) erstreckt, zur schraubenden Verbindung mit einem koronalen Gewinde (26) an der Schraubenbüchse (25), wobei die Schraubenbüchse (25) mit einem apikalen Gewinde (27) ausgestattet ist, das ausgebildet ist, um die Schraubenbüchse (25) mit dem Dentalimplantat (4) schraubend zu verbinden, und wobei die Schraubenbüchse (25) einen Durchmesser aufweist, der in Bezug auf den Durchmesser eines apikalen Endes des Schraubendurchführungskanals (5) erweitert ist,
wobei der Kopf (40) der Schraube (24) ausgebildet ist, um in einem voll angezogenen Zustand der Schraube (24) mit einer apikal gelegenen Kante (6) an einem stufenförmigen Ansatz des Schraubendurchführungskanals (5) anzuliegen.

4. Kombination nach Anspruch 3, wobei das apikale Gewinde (27) der Schraubenbüchse (25) als Außengewinde ausgebildet ist, das koronale Gewinde (26) der Schraubenbüchse (25) als Außengewinde ausgebildet ist und das Gewinde (45) der Schraube (24) als Innengewinde ausgebildet ist.

5. Kombination nach Anspruch 3, wobei das apikale Gewinde (27) der Schraubenbüchse (25) als Außengewinde ausgebildet ist, das koronale Gewinde (26) der Schraubenbüchse (25) als Innengewinde ausgebildet ist und das Gewinde (45) der Schraube (24) als Außengewinde ausgebildet ist.

6. Kombination nach einem oder mehreren der Ansprüche bis 5, wobei der Kopf (40) der Schraube (24) einen abgerundeten, sternförmigen Innensechskant hat.

## Claims

1. Combination of an abutment (3) for a dental implant (4), the abutment (3) comprising a screw passage channel (5), and a two-part screw for a dental implant (4) having a screw shaft (2) and a nut (1), wherein the nut (1) and the screw passage channel (5) are dimensioned such that the nut (1) is axially secured in the screw passage channel (5), and the nut (1) is equipped with an internal thread (19) for screw connection to a coronal thread (9) on the screw shaft (2), the screw shaft (2) being provided with an apical thread (13) configured for screw connection of the screw to the dental implant (4), with the end of the screw on which the apical thread (13) is formed having a diameter which is enlarged with respect to the diameter of an apical end of the screw passage channel (5),
wherein the nut (1) in the screwed state acts as a screw head which is configured to be flush, in a completely tightened state of the screw, with a step-like shoulder of the screw passage channel (5) with an apical edge (6).

2. Combination according to Claim 1, the nut (1) having a head (17) with a rounded, star-shaped inner hexagon.

3. Combination of an abutment (3) for a dental implant (4), the abutment (3) comprising a screw passage channel (5), and a two-part screw for a dental implant having a screw (24) and a screw nut (25), the screw being preassembled to the abutment (3), the head (40) of the screw (24) and the screw passage channel (5) being dimensioned such that the head (40) of the screw (24) is axially secured in the screw passage channel (5), and the screw (24) being provided apically with a thread (45) which, in the preassembled state, protrudes from the apical end of the screw passage channel (5), for screw assembly to a coronal thread (26) on the screw nut (25), wherein the screw nut (25) is provided with an apical thread (27) which is configured to screwingly connect the screw nut (25) to the dental implant (4), and wherein the screw nut (25) has a diameter which is enlarged with respect to the diameter of an apical end of the screw passage channel (5),
the head (40) of the screw (24) being configured to be flush, in a completely tightened state of the screw (24), with a step-like shoulder of the screw passage channel (5) with an apical edge (6).

4. Combination according to Claim 3, the apical thread (27) of the screw nut (25) being formed as an external thread, the coronal thread (26) of the screw nut (25) being formed as an external thread and the thread (45) of the screw (24) being formed as an internal thread.

5. Combination according to Claim 3, the apical thread (27) of the screw nut (25) being formed as an external thread, the coronal thread (26) of the screw nut (25) being formed as an internal thread and the thread (45) of the screw (24) being formed as an external thread.

6. Combination according to one or more of the Claims to 5, wherein the head (40) of the screw (24) has a rounded, star-shaped inner hexagon.

## Revendications

1. Combinaison d'un pilier (3) pour un implant dentaire (4), dans laquelle le pilier (3) comprend un canal de passage de vis (5), et une vis en deux parties pour un implant dentaire (4) avec une tige de vis (2) et un écrou (1), dans laquelle l'écrou (1) et le canal de passage de vis (5) sont dimensionnés de telle sorte que l'écrou (1) est reçu dans le canal de passage de vis (5) de manière axialement bloquée, et dans laquelle l'écrou (1) est formé avec un filetage intérieur (19) pour une liaison vissée avec un filetage coronaire (9) sur la tige de vis (2), dans laquelle la tige de vis (2) est pourvue d'un filetage apical (13) qui est formé afin de relier la vis à l'implant dentaire (4) de manière vissée, dans laquelle l'extrémité de la vis, sur laquelle le filetage apical (13) est formé, a un diamètre qui est élargi par rapport au diamètre d'une extrémité apicale du canal de passage de vis (5),
dans laquelle l'écrou (1) agit, à l'état vissé, comme une tête de vis qui est formée afin de porter, dans un état entièrement serré de la vis, au moyen d'un bord situé de manière apicale (6) sur une saillie en forme de gradin du canal de passage de vis (5).

2. Combinaison selon la revendication 1, dans laquelle l'écrou (1) comporte une tête (17) qui a un hexagone intérieur arrondi, en forme d'étoile.

3. Combinaison d'un pilier (3) pour un implant dentaire (4), dans laquelle le pilier (3) comprend un canal de passage de vis (5), et une vis en deux parties pour un implant dentaire avec une vis (24) et une bague de vis (25), dans laquelle la vis est préalablement montée avec le pilier (3), dans laquelle la tête (40) de la vis (24) et le canal de passage de vis (5) sont dimensionnés de telle sorte que la tête (40) de la vis (24) est reçue dans le canal de passage de vis (5) de manière axialement bloquée, et dans laquelle la vis (24) est pourvue d'un filetage (45) de manière apicale qui s'étend, à l'état préalablement monté, à partir de l'extrémité apicale du canal de passage de vis (5), pour une liaison vissée avec un filetage coronaire (26) sur la bague de vis (25), dans laquelle la bague de vis (25) est pourvue d'un filetage apical (27) qui est formé afin de relier de manière vissée la bague de vis (25) à l'implant dentaire (4), et dans laquelle la bague de vis (25) a un diamètre qui est élargi par rapport au diamètre d'une extrémité apicale du canal de passage de vis (5),
dans laquelle la tête (40) de la vis (24) est formée afin de porter, dans un état entièrement serré de la vis (24), au moyen d'un bord situé de manière apicale (6) sur une saillie en forme de gradin du canal de passage de vis (5).

4. Combinaison selon la revendication 3, dans laquelle le filetage apical (27) de la bague de vis (25) est formé comme un filetage extérieur, le filetage coronaire (26) de la bague de vis (25) est formé comme un filetage extérieur et le filetage (45) de la vis (24) est formé comme un filetage intérieur.

5. Combinaison selon la revendication 3, dans laquelle le filetage apical (27) de la bague de vis (25) est formé comme un filetage extérieur, le filetage coronaire (26) de la bague de vis (25) est formé comme un filetage intérieur et le filetage (45) de la vis (24) est formé comme un filetage extérieur.

6. Combinaison selon une ou plusieurs des revendications 3 à 5, dans laquelle la tête (40) de la vis (24) a un hexagone intérieur arrondi, en forme d'étoile.
